# EUROPEAN PATENT APPLICATION

(11) **EP 1 583 076 A1**
(43) Date of publication of application: **05.10.2005**
(21) Application number: 05102266.3
(22) Date of filing: 22.03.2005
(51) Int. Cl.: G10L 15/18, G10L 15/22, H04M 3/493

(54) **System and method for automatic generation of dialogue run time systems**

(30) Priority: 31.03.2004 US 812999
(71) Applicant: AT&T Corp., New York, NY 10013-2412 (US)
(72) Inventor: WILSON, James, M., 07922, Berkeley Heights (US); ROYCRAFT, Theodore, J., 07830, Califon (US); CASTILLO, Cecilia, Marie, 08833, Lebanon (US)
(74) Representative: Suckling, Andrew Michael

(57) **Abstract**

A system and method for automatically generating a spoken dialogue application is disclosed. In one embodiment, a graphical representation of a call flow is converted into a context free grammar representation, which is then converted into a finite state machine, which is then used as the basis for the spoken dialogue application

## Description

### BACKGROUND

### Field of the Invention

The present invention relates generally to dialogue systems and, more particularly, to a system and method for automatic generation of dialogue run time systems.

### Introduction

Spoken dialogue applications are applications that are often used to automate the process of receiving and responding to customer inquiries. Spoken dialogue applications use a combination of voice recognition modules, language understanding modules, and text-to-speech systems to appropriately respond to speech input received from a user or a customer. Billing inquiries, information queries, customer complaints, and general questions are examples of the speech input that is received by dialogue applications.

The development of a successful spoken dialogue application is a time consuming process. The development process typically begins with a graphical representation of a call flow. This graphical representation is provided to the spoken dialogue application developer who will then proceed to code the spoken dialogue application using the graphical representation as a guide. This coding process can be a lengthy process as the developer seeks to accurately code the application based on the graphical depiction of the call flow. What is needed is a process that reduces the time needed for development of the spoken dialogue application.

### SUMMARY

In accordance with the present invention, a process is provided for automatically generating a spoken dialogue application. In one embodiment, a graphical representation of a call flow is converted into a context free grammar representation, which is then converted into a finite state machine, which is then used as the basis for the spoken dialogue application.

Additional features and advantages of the invention will be set forth in the description which follows, and in part will be obvious from the description, or may be learned by practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth herein.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

FIG. 1 illustrates a flow chart of a process for generating a spoken dialogue application; and

FIG. 2 illustrates an example of a graphical representation of a call flow.

### DETAILED DESCRIPTION

Various embodiments of the invention are discussed in detail below. While specific implementations are discussed, it should be understood that this is done for illustration purposes only. A person skilled in the relevant art will recognize that other components and configurations may be used without parting from the spirit and scope of the invention.

A spoken dialogue system is typically represented by a call flow. The call flow is essentially a graph or network, possibly containing cycles over parts of the network. A path from the root node to a leaf node represents a specific dialogue. A call flow can contain huge (e.g., tens of thousands) or even unbounded numbers of unique dialogues.

As noted, a graphical description of the call flow was typically used by a spoken dialogue application developer as a model by which the application coding process would proceed. This coding process was typically a lengthy process as the developer sought to accurately code the application directly from available graphical description. As would be appreciated, this translation could be extremely difficult and error prone as concepts depicted in the call flow must often be interpreted by the dialogue application developer. For this reason, significant testing of the developed application code would be required to ensure that the dialogue application developer correctly modelled the call flow.

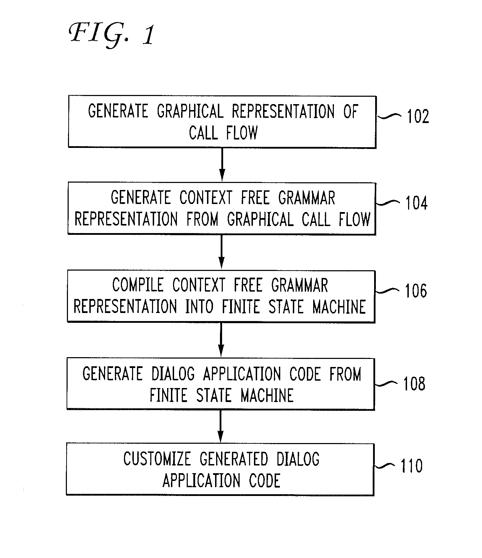

In accordance with the present invention, the dialogue application can be coded using an automated process that begins with a graphical description of the call flow. To illustrate this process, reference is made to the flowchart of FIG. 1. As illustrated in FIG. 1, the generation of a dialogue application begins at step 102, where a graphical representation of a call flow is generated.

In one embodiment, the graphical representation is based on standardized graphical elements. These standardized graphical elements can be produced by various graphical editing programs such as the Microsoft VISIO™ software.

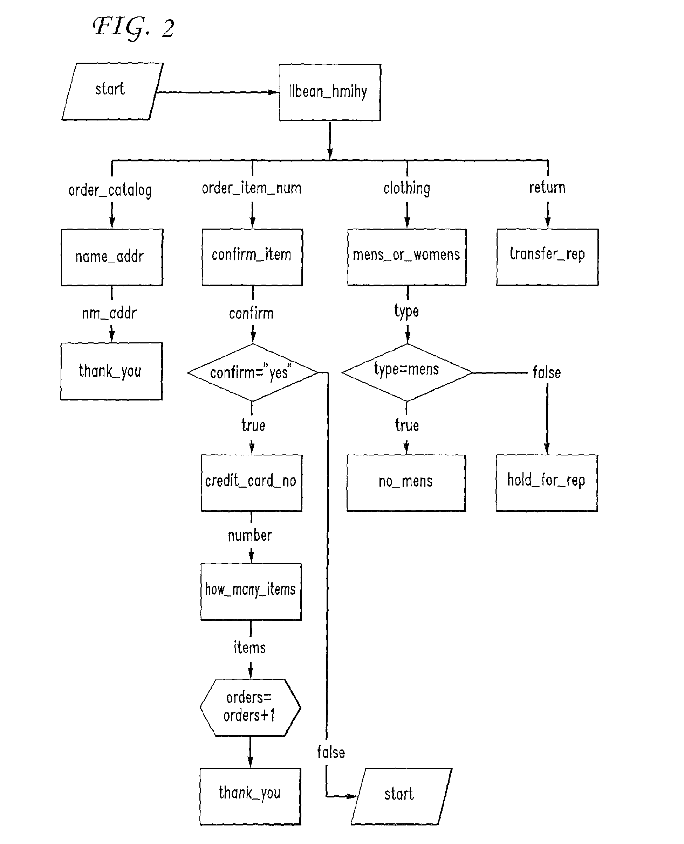

A graphical description of an example call flow illustrated in FIG. 2. As illustrated, the example call flow is of a fictitious mail order company. The call flow illustrates how a phone customer could accomplish one of four tasks: request a catalo (order_catalog), buy an item by item number (order_item_num), inquire about clothing (clothing), and request a return (return). During the course of the conversation with the customer, a call would progress through the call flow guided by the customer's utterances. The dialogue system would also respond to the customer with prompts.

Each state (or point) in the call flow can have one or more state variables associated with the state. These variables can have string or numeric values and can be created, tested or changed as progress is made through the call flow. The values of these variables can also affect the call flow.

The shapes of the boxes on the call flow can have special meanings. For example, a parallelogram can represent a starting state, rectangles can represent prompts to customers, diamonds can represent state variable Boolean tests, and hexagons can represent state variable manipulation.

Lines with arrows show possible transitions between states and each arrow can be labelled by what is determined to be the customer's intent. For example, the first prompt is "How may I help you?" To that prompt, the customer may then respond, "I'd like to order item number B453 from your catalo". Natural language understanding software in the dialogue system would determine the customer's intent from this response. In this case, the intent is determined to be "item_number" and this is the call path that is followed. In this manner, a dialogue can work its way through the call flow.

While the graphical representation of the call flow is a convenient way for a call flow designer to view the call flow, the graphical representation is not a suitable form for the dialogue runtime system to use. Thus, in one embodiment, the graphical representation of the call flow is converted into a context free grammar representation. This conversion process is represented by step 104 in the flowchart of FIG. 1.

As noted, the graphical representation of the call flow can be based on standardized graphical elements. Recognition of these standardized graphical elements enables the automatic conversion of the graphical representation of the call flow into a context free grammar representation.

In one embodiment, the graphical representation of the call flow is converted into an augmented Backus-Naur Form (BNF) representation. An example of the augmented BNF representation of the example call flow of FIG. 2 is provided below.

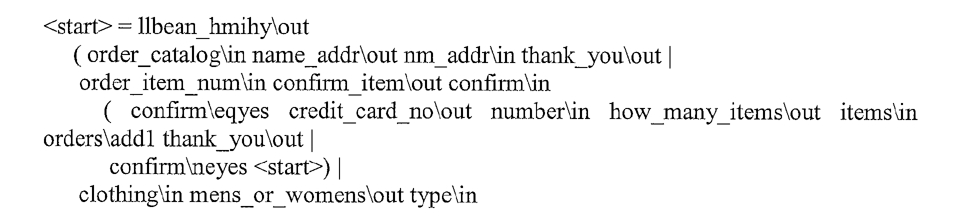

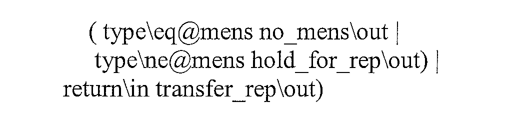

The BNF representation is referred to as augmented because, in addition to simply naming the state transitions, a naming convention is observed that assigns additional meanings to the state transitions. For example, a suffix in the form "\xyz" can be added to the transition name to give that transition a special meaning.

For example, in the example call flow of FIG. 2, the first prompt is "llbean_how-may_I_help_you\out". The "\out" suffix indicates that this is a prompt and the name of the prompt is "llbean_how_may_I_help_you". Similarly, "item_number\in" represents the user intent (or category) to place an order by item number. In one embodiment, some of the valid suffixes and meanings include: <PromptName>\out means a prompt using <PromptName> (e.g., hello\out); <category>\in means a category (or user intent) named <category> (e.g., buy\in); <var>\set<value> means set state variable <var> to <value> (e.g., counter\set0); <var>\add<value> means add <value> to state variable <var> (e.g., counter\add4); <var>\eq<value> means is <var> equal to <value>? (e.g., counter\eq0); and <var>\ne<value> means is <var> not equal to <value>? (e.g., counter\ne0).

After the graphical representation of the call flow is converted into an augmented BNF representation, the dialogue application generation process of FIG. 2 then proceeds to step 106 where the augmented BNF representation is compiled into a finite state machine (FSM). In general, the FSM representation permits algorithms to be applied that "walk" the FSM from the root to a leaf of the FSM. Each such traversal of the FSM represents a valid path through the call flow and can be automatically mapped to specific points in the call flow. Hence, each path through the FSM can represent an actual dialogue or call scenario.

In one embodiment, FSMs are used to maintain state information as well as flow information. With the state information, the state depends on more than the current node in the FSM. The state also depends on the path that was traversed to get to that node. In one embodiment, a state vector is used to represent all aspects of the current state. Each visited node in the call path has its own state vector. If a node is visited more than once for a particular path, then each visit to that node will produce another state vector.

After the FSM is generated, the dialogue application generation process of FIG. 2 then proceeds to step 108 where dialogue application code is generated from the FSM, which generation process provides user-modifiable functions for every point in the call flow. In many cases, little modification to the generated code is required, and for simple applications, no modification may be necessary.

In one embodiment, the dialogue application is based on a prompt file template and a spoken language understanding (SLU) context file template. In general, the prompt file template can include various command strings that would provide some level of instruction to the dialogue application. For example, the command strings could identify a prompt to play to the user, identify a database access command, identify a command string (e.g., call transfer) to a telephony switch, etc. SLU context file template, on the other hand, includes context information that would be useful by the SLU engine to interpret a user's intent. For example, SLU context file template could include information that would alert the SLU engine as to the query that has been presented to the user. In the dialogue application building process of step 108, an initial prompt file template and SLU context file template could be created. These templates could be further customized prior to the finalization of the dialogue application.

As noted, the resulting generated application code creates a runtime environment that can walk the FSM. In one embodiment, the application is based on template functions. Each terminal symbol of the BNF is typed by a suffix symbol that represents a specific type of action with respect to the call flow. For example, a user request is an input terminal symbol (e.g., "credit\in") and the playing of a prompt is an output action (e.g., "playGreeting\out"). Each type of function has an associated template function with default behaviour that can be overridden.

Each node of the FSM is mapped to a corresponding terminal function. The runtime systems walks the FSM and invokes the corresponding function at each node. Information about actions to take, such as playing a prompt or starting a speech recognition, can be stored in a table. This allows for on the fly modification of an application without having to restart the system. For example, a prompt could be replaced through a table modification while the system is running.

It should be noted that there are different classes of functions corresponding to the different types of nodes in the call flow, e.g., output functions, input functions, trace functions, etc. In one embodiment, for each class of functions, there is a common function that all individual functions of that type call, so in most cases, only the common function ever needs to be changed since most functions of a particular type do very similar actions.

An example of this would be output functions. In general, output functions are always going to play a prompt, so if the common output function does a table lookup based on the name of the node, all output functions can share this code. On the other hand if one of the output functions requires some special functionality, it can be implemented in the function specific to that particular node.

In general, developing a spoken dialogue system is usually very complex and the requirements are often open to interpretation. With the process of the present invention there is no ambiguity, as the application code is automatically generated from the requirements. If the requirements change, the application code can be regenerated without losing any of the work already done. It is thus very easy to make quick changes and prototype an application without breaking the application code.

Traditionally, call flow design requires many cycles of development, deployment, and redesign. With the principles of the present invention it is simple to make changes to the call flow and the underlying implementation, making it easier to experiment with different call flows without jeopardizing the development schedule.

The principles of the present invention can therefore be used for rapid prototyping and development. It decreases the development time allowing for more iterations of the call flow.

Embodiments within the scope of the present invention may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures. When information is transferred or provided over a network or another communications connection (either hardwired, wireless, or a combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other embodiments of the invention may be practiced in network computing environments with many types of computer system configurations, including personal computers, hand-held devices, multiprocessor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

Although the above description may contain specific details, they should not be construed as limiting the claims in any way. Other configurations of the described embodiments of the invention are part of the scope of this invention. Accordingly, the appended claims and their legal equivalents only should define the invention, rather than any specific examples given.

## Claims

1. A method of generating a spoken dialogue application, comprising:
generating a finite state machine from a context free grammar representation of a call flow for a spoken dialogue system; and
generating application code for functions to be executed upon state transitions in said generated finite state machine, wherein said generated application code for said functions are executable during runtime of said spoken dialogue system.

2. The method of claim 1, further comprising:
generating a graphical representation of a call flow; and
generating the context free grammar representation of said call flow using said graphical representation.

3. The method of claim 2, wherein said graphical representation is generated using standardized graphical elements.

4. The method of claim 2, wherein said graphical representation is generated using VISIO.

5. The method of claim 1, wherein said context free grammar representation is in a Backus-Naur Form format.

6. The method of claim 5, wherein said context free grammar representation is in an augmented Backus-Naur Form format.

7. The method of claim 1, wherein a function is associated with a node in said finite state machine.

8. The method of claim 1, further comprising customizing generated application code.

9. The method of claim 1, wherein generated application code associated with an output function performs a table lookup for prompt information.

10. A spoken dialogue system, comprising:
means for traversing a finite state machine, said finite state machine being generated from a context free grammar representation of a call flow for a spoken dialogue system; and
means for invoking generated application code for functions associated with nodes in said finite state machine, wherein each node of said finite state machine is mapped to a corresponding function.

11. The system of claim 10, wherein said context free grammar representation is generated from a graphical representation of said call flow.

12. The system of claim 10, wherein said context free grammar representation is in a Backus-Naur Form format.

13. The system of claim 12, wherein said context free grammar representation is in an augmented Backus-Naur Form format.

14. The system of claim 10, wherein said generated application code performs a table lookup for prompt information.
